# EUROPÄISCHE PATENTSCHRIFT

(11) **EP 1 272 039 B1**
(45) Veröffentlichungstag und Bekanntmachung des Hinweises auf die Patenterteilung: **13.10.2004**
(21) Anmeldenummer: 01921011.1
(22) Anmeldetag: 11.04.2001
(51) Int. Cl.: A21C 7/00, A21C 5/04

(54) **VORRICHTUNG ZUM PORTIONIEREN UND WIRKEN VON TEIG**
APPORTIONING AND KNEADING DEVICE FOR DOUGH
DISPOSITIF POUR PORTIONNER ET PETRIR UNE PATE

(30) Priorität: 11.04.2000 DE 6200000
(43) Veröffentlichungstag der Anmeldung: 08.01.2003
(73) Patentinhaber: König Maschinen Gesellschaft mbH, 8045 Graz (AT)
(72) Erfinder: RAUCH, Eduard, A-8321 (AT); THOMASSER, Peter, A-8200 Gleisdorf (AT)
(74) Vertreter: Wildhack, Helmut, Dipl.-Ing. Dr.
(86) Internationale Anmeldenummer: PCT/AT2001/000103
(87) Internationale Veröffentlichungsnummer: WO 2001/076374

(56) Entgegenhaltungen:
- WO-A-93/00818
- WO-A-93/00820
- DE-A- 2 438 316
- DE-B- 1 299 581
- US-A- 1 960 367

## Beschreibung

Die Erfindung bezieht sich auf eine Vorrichtung zum Portionieren und Wirken von Teig, mit einer in einem Gestell um eine horizontale Achse durch einen Hauptantrieb schrittweise drehbaren Trommel, die an ihrem Umfang mit Aufnahmeöffnungen für die zu wirkenden Teigportionen versehen ist, die an einer Portionierstelle des Trommelumfanges von einer Eindrückeinrichtung in die Aufnahmeöffnungen eingebracht werden, und mit einer Wirkeinrichtung, die an einer in Bezug auf die Portionierstelle in Umfangsrichtung der Trommel versetzten Wirkstelle angeordnet ist, wobei in jeder Aufnahmeöffnung ein Kolben in radialer Richtung der Trommel durch eine gekrümmte Zwangsführung verschiebbar ist, die zumindest in den Stillstandsphasen der Trommel durch einen Antrieb relativ zur Trommel verdrehbar ist und zwei relativ zueinander verstellbare Bauteile aufweist

Eine solche Vorrichtung ist bekannt (WO-A-9300818). Die Verstellmöglichkeit der beiden Bauteile ergibt den Vorteil, dass das Volumen bzw. Gewicht des an der Portionierstelle in die Aufnahmeöffnung eingebrachten Teigstückes durch mehr oder weniger große Zurückziehung des Kolbens in der Aufnahmeöffnung geändert werden kann, ohne dass sich diese Veränderung wesentlich auf die Kolbenstellung bzw. Kolbenbewegung an der Wirkstelle auswirkt.

Eine ähnliche Vorrichtung, jedoch mit einteiliger gekrümmter Zwangsführung, ist ebenfalls bekannt (EP 0 668 016 A1), bei welcher durch eine besondere Formgebung der Aufnahmeöffnungen den Teigstücken eine im wesentlichen rechteckige Form mit abgerundeten Ecken gegeben werden kann.

Es besteht jedoch der Wunsch, den an der Wirkstelle auf das Teigstück einwirkenden Wirkdruck unabhängig von der Verdrehung der Zwangsführung ändern zu können, um die Wirkergebnisse zu verbessern. Diesem Wunsch kann die zuerst genannte bekannte Vorrichtung nicht Rechnung tragen, da die einmal erfolgte Verstellung der beiden die Zwangsführung bildenden Bauteile bei der Verdrehung der Zwangsführung ungeändert bleibt. Bei der zweitgenannten bekannten Vorrichtung ist eine Verstellung der Zwangsführung, abgesehen von ihrer Verdrehung, durch die Einteiligkeit des die Zwangsführung tragenden Baukörpers überhaupt nicht möglich.

Die Erfindung setzt sich zur Aufgabe, eine Vorrichtung der eingangs geschilderten Art so zu verbessern, dass die Wirkverhältnisse hinsichtlich des auf das Teigstück wirkenden Wirkdruckes weit über das bei der bekannten Vorrichtung mögliche Maß hinaus verändert werden können, um sich an unterschiedliche Teigvolumina und/oder Teigqualitäten besser anpassen zu können. Die Erfindung löst diese Aufgabe dadurch, dass die beiden Bauteile durch einen weiteren Antrieb unabhängig von der Verdrehung der Zwangsführung relativ zueinander zumindest während des Wirkvorganges motorisch so verstellbar sind, dass zumindest während des Wirkvorganges eine Verschiebung jedes an der Wirkstelle befindlichen Kolbens in radialer Richtung der Trommel erfolgt. Während somit bei der bekannten Vorrichtung die Vorschub- bzw. Rückzugsbewegung der Kolben an der Wirkstelle nur abhängig ist von der eingestellten Gestalt der Zwangsführung, überlagert sich beim Erfindungsgegenstand zu dem Einfluss der Gestalt der Zwangsführung noch der motorisch bewirkte Einfluss der Relativverstellung der beiden Bauteile. Damit ist für den Wirkvorgang eine weitgehende Anpassung an unterschiedliche Voraussetzungen der zu wirkenden Teigportionen gegeben.

Die Relativverstellung der beiden Zwangsführungsbauteile kann auf die Zeiten der Bewegungspausen der schrittweisen Trommelbewegung beschränkt sein, gemäß einer Weiterbildung der Erfindung können aber die beiden Bauteile durch den weiteren Antrieb schon vor Beginn des Wirkvorganges so verstellt werden, dass die Kolben nach außen bewegt werden. Damit lässt sich - unabhängig von der Größe der zu wirkenden Teigportion und unabhängig von der Gestalt der Zwangsführung - die Vorschubbewegung der Kolben so steuern, dass die zu wirkende Teigportion während des Trommelvorschubes schon vor Erreichen der Wirkstelle über den Trommelumfang vorgeschoben wird, um die sogenannte Stempelanhebung zu erzielen. Dadurch wird das zu wirkende Teigstück gleich nach Erreichen der Wirkstelle wirksam von der Wirkeinrichtung erfasst. Die Erfindung gibt in einfacher Weise die Möglichkeit, das Maß und den Zeitpunkt dieser Stempelanhebung zu variieren.

Der weitere Antrieb, über welchen die gegenseitige motorische Verstellung der beiden Zwangsführungsbauteile erfolgt, könnte direkt kinematisch vom Hauptantrieb abgeleitet werden. Günstiger ist es jedoch gemäß einer Weiterbildung der Erfindung, dass der weitere Antrieb einen zum Hauptantrieb zusätzlichen Servomotor aufweist, der von einer vom Hauptantrieb verdrehten Zählscheibe gesteuert ist. Diese Zählscheibe gibt Impulse auf eine Steuerung, welche Drehrichtung und Laufdauer des Servomotors bestimmt, so dass über die dadurch bewirkte Relativverstellung der beiden Zwangsführungsbauteile die Kolben an der Wirkstelle und/oder an der Portionierstelle und gegebenenfalls auch im Bereich zwischen Portionierstelle und Wirkstelle in der gewünschten Weise bewegt werden. Es bereitet keine Schwierigkeiten, die Steuerung so zu gestalten, dass eine Einstellmöglichkeit gegeben ist, d.h., dass Zeitpunkt des Beginns und/oder des Endes der Bewegung der beiden Zwangsführungsbauteile verändert werden können, ebenso wie das Ausmaß der Veränderung.

Eine einfache Konstruktion ergibt sich im Rahmen der Erfindung, wenn die beiden Bauteile geradlinig relativ zueinander verstellbar sind, wobei der eine Bauteil in einer geradlinigen Führung des anderen Bauteiles geführt ist. Es wäre möglich, beide Bauteile in ihrer Lage verstellbar zu machen, jedoch ist es gemäß einer bevorzugten Ausführungsform der Erfindung konstruktiv wesentlich einfacher, den einen Bauteil mit einer zur Verdrehung der Zwangsführung dienenden Hohlwelle starr zu verbinden, wogegen der andere Bauteil eine Zahnstange trägt, die mit einem Zahnrad kämmt, das auf einer in der Hohlwelle gelagerten Welle sitzt, die durch den weiteren Antrieb verdrehbar ist. Für die Einleitung dieser Verdrehbewegung besteht eine besonders günstige Bauweise erfindungsgemäß darin, dass die Welle ein Schneckenrad trägt, das mit einer durch den weiteren Antrieb verdrehten Schnecke kämmt. Wie bekannt, wirkt ein solcher Schneckenantrieb selbsthemmend in der Gegenrichtung, so dass eine unbeabsichtigte Verstellung der Antriebswelle, etwa durch den von der Wirkeinrichtung ausgeübten Druck, nicht möglich ist.

In der Zeichnung ist der Erfindungsgegenstand an Hand eines Ausführungsbeispieles schematisch veranschaulicht. Fig.1 zeigt die Vorrichtung, teilweise im Vertikalschnitt. Fig.2 zeigt einen Schnitt durch die Wellen, welche für die Verdrehung der gesamten Zwangsführung bzw. für die Relativverstellung der beiden Zwangsführungsbauteile dienen. Fig.3 zeigt die Bauteile, welche zur Verstellung der beiden Zwangsführungsbauteile dienen. Die Fig.4 und 5 zeigen die beiden Bauteile der Zwangsführung in auseinandergenommenem Zustand. Die Fig.6 und 7 zeigen die beiden Bauteile der Zwangsführung in auseinandergezogenem bzw. in eingezogenem Zustand. Die Fig.8 und 9 zeigen die Zwangsführung in zwei unterschiedlichen Betriebsphasen.

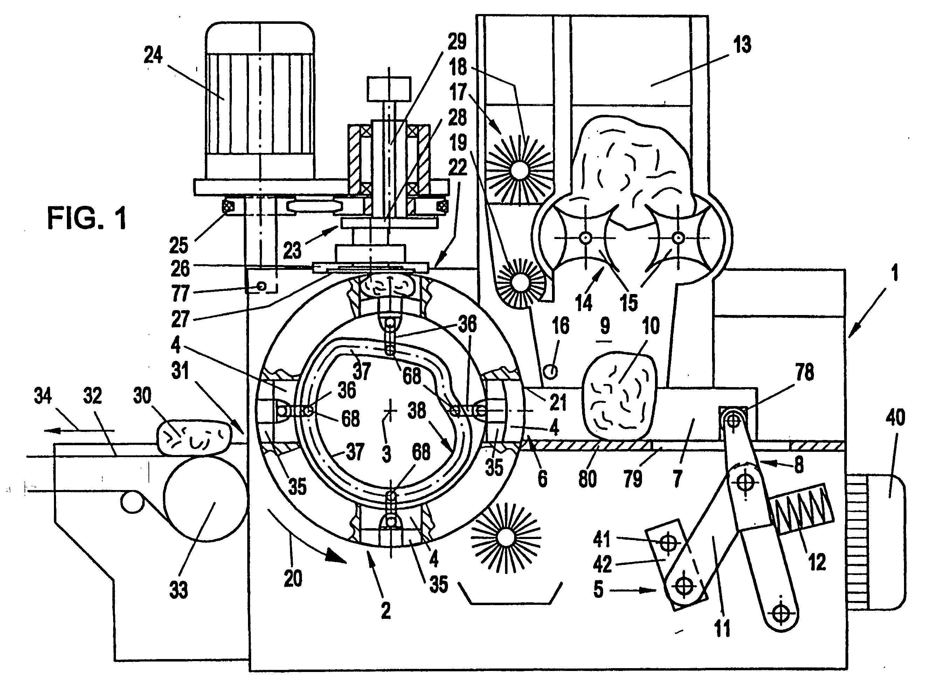

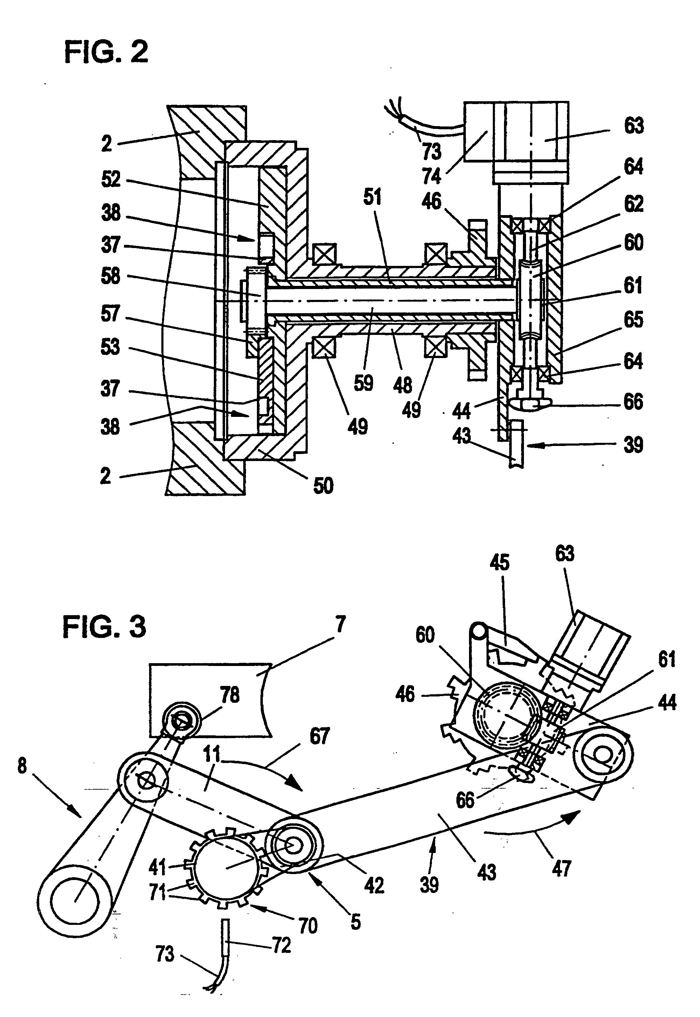

Die Vorrichtung hat ein Gestell 1 (Fig.1), in welchem eine Trommel 2 um eine horizontale Achse 3 drehbar gelagert ist. Die Trommel 2 hat an ihrem Umfang vier sich in Achsrichtung erstreckende Reihen von Aufnahmeöffnungen 4 für den zu wirkenden Teig, welche Aufnahmeöffnungen 4 über den Umfang der Trommel 2 verteilt in gleichmäßigen Abständen angeordnet sind. Die Trommel wird durch einen Hauptantrieb 5 (Fig.1,3) schrittweise in stets der gleichen Richtung gedreht. Hiedurch gelangt jeweils eine Reihe von Aufnahmeöffnungen 4 zu einer Portionierstelle 6, an welcher der Teig 10 mittels einer Eindrückeinrichtung 8 in die Aufnahmeöffnungen 4 eingedrückt wird. Die Eindrückeinrichtung 8 hat einen Schieber 7, der in einer Kammer 9 des Gestelles 1 in horizontaler Richtung verschiebbar gelagert ist und durch einen vom Hauptantrieb 5 angetriebenen Kurbeltrieb 11 hin und her bewegt wird. In diesen Kurbeltrieb 11 ist eine Feder 12 eingeschaltet, welche verhindert, dass der Teig 10 bei der Vorwärtsbewegung des Schiebers 7 zu stark gequetscht wird. Der Teig 10 gelangt in die Kammer 9 aus einem Einfüllschacht 13 mittels einer Vorportioniereinrichtung 14, welche zwei um horizontale Achsen im Gegensinn umlaufende Sternwalzen 15 aufweist, die intermittierend in Abhängigkeit vom Volumen des Teiges 10 in der Kammer 9 angetrieben sind. Dieses Volumen wird durch einen Fühler 16 überwacht, welcher bei der Vorwärtsbewegung des Schiebers 7 vom verdrängten Teig 10 betätigt wird und dabei einen Impuls abgibt. Ist die Teigmenge in der Kammer 9 zu gering, so fällt der vom Fühler 16 erzeugte Impuls aus, so dass mittels der Sternwalzen 15 Teig in die Kammer 9 nachgeliefert wird. Dies kann entweder für eine bestimmte Zeitdauer erfolgen, oder so lange, bis der Fühler 16 wieder anspricht.

Eine Bemehlungsvorrichtung 17 bemehlt den Teig in der Kammer 9 mittels einer Dosierbürste 18 und einer Verteilerbürste 19.

Der in die Aufnahmeöffnungen 4 eingedrückte Teig 10 wird bei der Weiterbewegung der Trommel 2 in Richtung des Pfeiles 20 durch eine Abscherkante 21 abgeschert, wodurch die eigentliche Portionierung erfolgt. Die in den Aufnahmeöffnungen 4 befindlichen Teigstücke gelangen nach einer Drehung der Trommel 2 um 90° zu einer Wirkstelle 22, die sich im Bereiche des oberen Trommelscheitels befindet. Dort ist am Gestell 1 eine Wirkeinrichtung 23 befestigt, die von einem Motor 24 über einen Keilriementrieb 25 angetrieben wird und ein Wirkwerkzeug 26 in Form einer Platte hat, die beim Wirkvorgang eine kreisende Bewegung relativ zu den ihr benachbarten Aufnahmeöffnungen 4 vollführt und an ihrer der Trommel 2 zugewendeten Seite mit je einer stufenförmig abgesetzten Vertiefung 27 pro Aufnahmeöffnung 4 versehen ist. Die kreisende Bewegung des Wirkwerkzeuges 26 wird durch eine exzentrische Verbindung 28 zwischen der Platte 26 und der vom Keilriementrieb 25 angetriebenen Welle 29 erzielt. Die Exzentrizität dieser Verbindung 28 ist zweckmäßig einstellbar, um den Radius der Kreisbewegung des Wirkwerkzeuges 26, auch bei laufendem Betrieb, verändern zu können.

Die fertig gewirkten Teigstücke 30 werden an einer Ablegestelle 31 aus den Aufnahmeöffnungen 4 ausgestoßen und auf ein Förderband 32 abgelegt, das um eine nahe der Trommel 2 angeordnete Umlenkrolle 33 geführt ist und die Teigstücke 30 in Richtung des Pfeiles 34 abtransportiert. Die erwähnte Ausstoßung wird hervorgerufen durch eine radiale Auswärtsbewegung eines in jeder Aufnahmeöffnung 4 geführten Kolbens 35. Jeder Kolben 35 ist mittels eines Gestänges 36 an einer gekrümmten Kurvenbahn 37 einer Zwangsführung 38 derart geführt, dass eine Relativverdrehung dieser Zwangsführung 38 in Bezug auf die Trommel 2 eine radiale Bewegung des Kolbens 35 in seiner Aufnahmeöffnung 4, entweder nach innen oder nach außen, zur Folge hat. Diese Relativverdrehung wird durch einen später näher beschriebenen Antrieb 39 (Fig.2,3) erzeugt. Im wesentlichen ist diese Kurvenbahn 37 so geformt, dass die während der Bewegungspausen der schrittweisen Trommelbewegung erfolgende Relativverdrehung der Kurvenbahn 37 an der Portionierstelle 6 eine Zurückziehung der Kolben 35 bewirkt, zwecks Ausübung eines Ansaugeffektes auf den in die Aufhahmeöffnungen 4 einzudrückenden Teig. An der Wirkstelle 22 erfolgt im Laufe des Wirkvorganges eine weitere Zurückziehung des jeweiligen Kolbens 35, um dem durch den Wirkvorgang allmählich in eine ballige Form übergeführten Teigstück mehr Platz zu geben. An der Ablegestelle 31 werden die Kolben 35 hingegen so weit nach außen geschoben, dass die äußere Stirnfläche jedes Kolbens bündig ist mit der Trommelumfangsfläche, so dass sich die Teigstücke 30 sicher aus den Aufnahmeöffnungen 4 auf das Förderband 32 übergeben werden.

Die schrittweise Bewegung der Trommel 2 ist ebenso wie die Bewegung des Antriebes 39 für die Relativverdrehung der Zwangsführung 38 vom Hauptantrieb abgeleitet. Hiezu treibt der Hauptmotor 40 (Fig.1) eine Hauptantriebswelle 41 (Fig.1,3) an, auf der für den Trommelantrieb ein Kurbelarm 42 sitzt, der mittels einer Lasche 43 gelenkig mit einer Schwinge 44 verbunden ist, die eine Klinke 45 gelenkig trägt, die mit einem Klinkenrad 46 zusammenwirkt. Wird daher die Schwinge 44 von der Lasche 43 um 90° in Richtung des Pfeiles 47 in die in Fig.3 dargestellte Endstellung geschwenkt, so wird während dieser 90°-igen Verschwenkung das Künkenrad 46 durch die Klinke 45 mitgenommen und entsprechend verdreht. Das Klinkenrad 46 sitzt fest auf einer Hohlwelle 48 (Fig.2), die mittels Wälzlagern 49 drehbar im Gestell 1 gelagert ist. Die Hohlwelle 48 trägt einen Aufnahmeflansch 50, an welchem die Trommel 2 befestigt ist.

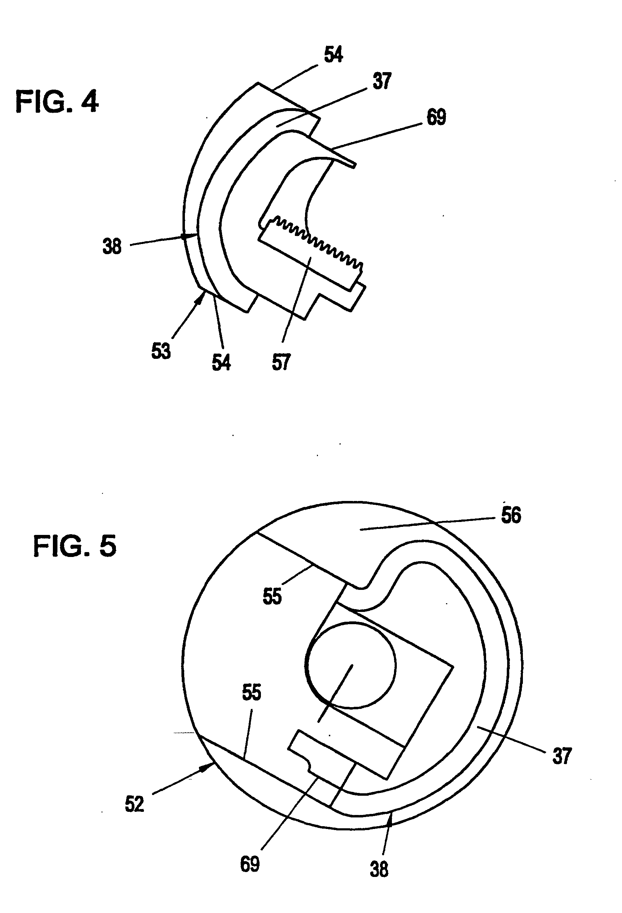

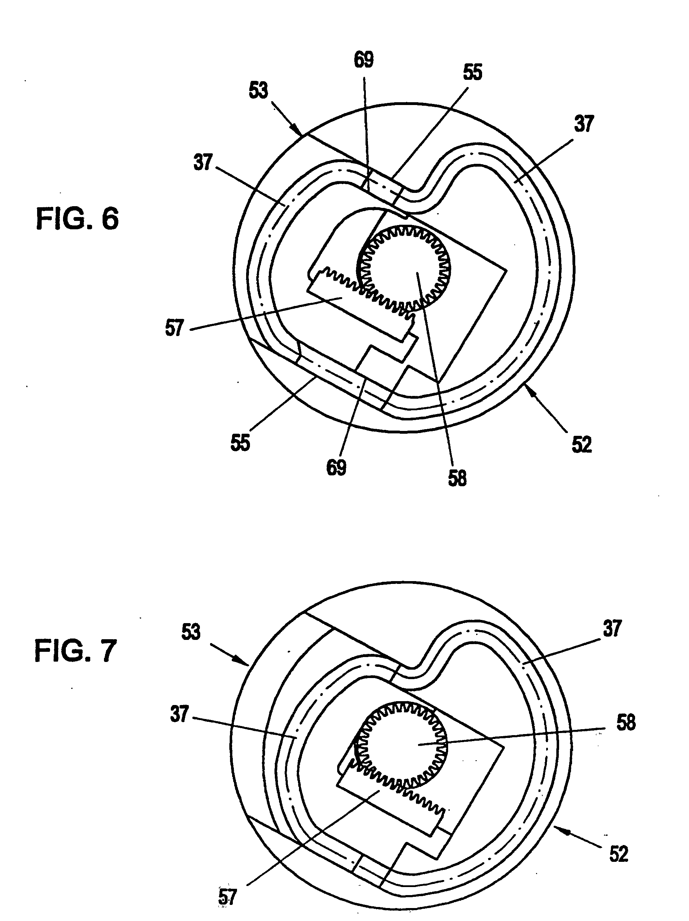

Die Schwinge 44 bildet zugleich einen Bauteil des Antriebes 39 für die Relativverdrehung der Zwangsführung 38. Hiefür ist an der Schwinge 44 eine von einem Rohr gebildete Hohlwelle 51 starr befestigt, welche die Hohlwelle 48 durchsetzt und in dieser gelagert ist. An ihrem anderen Ende trägt die Hohlwelle 51 einen von einer Scheibe gebildeten Bauteil 52, der im Aufnahmeflansch 50 passend sitzt und die Zwangsführung 38 für die Kolben 35 trägt. Die gekrümmte Kurvenbahn 37 der Zwangsführung 38 ist einerseits an diesem Bauteil 52 vorgesehen, anderseits an einem relativ zum Bauteil 52 verstellbaren Bauteil 53, der von einem Segment gebildet ist, das vom Bauteil 52 getragen ist, jedoch relativ zu ihm geradlinig verstellbar ist. Der scheibenförmige Bauteil 52 und der von ihm gesonderte segmentförmige Bauteil 53 sind in den Fig. 4 und 5 in voneinander getrenntem Zustand näher dargestellt, wogegen die Fig.6 bis 9 diese beiden Bauteile 52,53 in miteinander zusammenwirkender Lage, jedoch in verschiedenen Betriebsstellungen, zeigen. Wie Fig. 4 zeigt, trägt der Bauteil 53 zwei parallel zueinander verlaufende Seitenflächen 54, die entlang geradliniger, ebenfalls parallel zueinander verlaufender Führungen 55 des Grundkörpers 56 des Bauteils 52 geführt sind. Dadurch sind die beiden Bauteile 52,53 für die gegenseitige Verstellung aneinander geführt. Die Verstellung erfolgt mittels einer vom Bauteil 53 getragenen Zahnstange 57, die mit einem Zahnrad 58 kämmt, das auf einer die rohrförmige Hohlwelle 51 durchsetzenden Welle 59 sitzt, die an ihrem anderen Ende ein Schneckenrad 60 trägt, das mit einer Schnecke 61 kämmt, welche auf einer Welle 62 sitzt, die durch einen Servomotor 63 verdreht werden kann. Die Welle 62 ist mittels Wälzlagern 64 in einem Gehäuse 65 gelagert, welches auch den Servomotor 63 trägt und an der Schwinge 44 befestigt ist. Die Welle 62 durchsetzt das Gehäuse 65 und ist an ihrem dem Servomotor 63 abgewendeten Ende mit einem Handrad 66 versehen, durch welches die Welle 62 auch von Hand, unabhängig vom Servomotor 63, verdreht werden kann. Wie ersichtlich, bewirkt eine Drehung der Welle 62, sei es von Hand, oder vom Servomotor 63 aus, über das Zahnrad 58 und die Zahnstange 57 eine Veränderung der Relativlage des Bauteiles 53 an der Scheibe 52. Damit wird auch der vom Bauteil 53 getragene Abschnitt der Kurvenbahn 37 verstellt. Diese Verstellung erfolgt unabhängig von und zusätzlich zu der gemeinsamen Verdrehung der beiden Bauteile 52,53, welche vom Hauptmotor 40 über die Hauptantriebswelle 41, den Kurbelarm 42, die Lasche 43, die Schwinge 44 und die Hohlwelle 51 erfolgt. Während die Trommel 2 bei der Umlaufbewegung der Hauptantriebswelle 41 in Richtung des Pfeiles 67 nur während der 90°-Verschwenkung der Schwinge 44 in Richtung des Pfeiles 47 jeweils um einen Schritt (90°) gedreht wird, macht die Schwinge 44 die Vor- und Rückbewegung der Lasche 43 voll mit, wird also für jede Umdrehung der Hauptantriebswelle 41 einmal in Richtung des Pfeiles 47 entgegen dem Uhrzeigersinn (Fig.3) verschwenkt und dann wieder zurück um ebenfalls 90°. Während der Verschwenkung entgegen dem Uhrzeigersinn macht somit die Schwinge 44 die Verdrehung der Trommel 2 um einen Schritt (90°) mit. Während der Stillstandsphasen der Trommel 2 wird die Schwinge 44 wieder zurückgedreht und bewirkt damit über die Hohlwelle 51 eine Verdrehung des Bauteiles 52 und des von ihm getragenen Bauteiles 53 relativ zur Trommel. Da die einzelnen Stellen der Kurvenbahn 37 der Zwangsführung 38 für die Kolben 35 von der Drehachse der Trommel 2 unterschiedlich weit entfernt sind, bewirkt diese Verdrehung der Kurvenbahn 37 relativ zur Trommel 2 die erwähnte Vor- bzw. Rückbewegung der Kolben 35 in den Aufnahmeöffnungen 4, da jeder Kolben 35 mit an seinem Gestänge 36 angeordneten Führungsrollen 68 (Fig.1) sicher in der Zwangsführung 38 geführt ist. Damit die Führungsrollen 68 bei der Verstellung des Bauteiles 53 relativ zum Bauteil 52 nicht aus der Zwangsführung 38 freikommen können, sind innen an den beiden Bauteilen 52,53 Verlängerungen 69 der Innenwände der Kurvenbahn vorgesehen, welche den Führungen 55 gegenüberliegen, so dass auch in der am weitesten auseinandergezogenen Stellung der beiden Bauteile 52,53 stets eine sichere Führung für die Führungsrollen 68 der Kolben 35 in allen Drehstellungen der Kurvenbahn 37 gegeben ist (siehe auch Fig.6,7).

Die Kurvenbahn 37 ist so gestaltet, dass sich beim Zurückdrehen der Zwangsführung 38 (in Bezug auf die Trommel 2) an der Portionierstelle 6 (Fig.1) eine Zurückziehung der Kolben 35 in den Aufnahmeöffnungen 4 ergibt, um die Einführung des Teiges in die Aufnahmeöffnungen 4 durch Ansaugen zu unterstützen. Ebenso erfolgt an der Wirkstelle 22 eine Zurückziehung der Kolben 35, um dem durch den Wirkvorgang allmählich in eine ballige Form übergeführten Teigstück genügend Platz zu lassen. Hingegen erfolgt an der Ablegestelle 31 die bereits erwähnte Auswärtsbewegung der Kolben 35 zwecks Auswurf der Teigstücke aus den Aufnahmeöffnungen 4. Zusätzlich zu diesen Bewegungen ist es durch die Verstellmöglichkeit der beiden die Zwangsführung 38 bildenden Bauteile 52,53 möglich, den während des Wirkvorganges auf das Teigstück ausgeübten Wirkdruck exakt einzustellen bzw. die Geschwindigkeit, mit welcher der Kolben 35 in der Aufnahmeöffnung 4 zurückgezogen wird, zu verändern, d.h., die Steilheit der Absenkkurve zu variieren. Ebenso ist es möglich, die Kolben 35 in den Aufnahmeöffnungen 4 im Bereich der Wirkstelle 22 zunächst anzuheben (sogenannte "Stempelanhebung"), um die Teigstücke gegen das Wirkwerkzeug 26 zu drücken. Diese Stempelanhebung kann schon erfolgen, bevor die betreffende Aufnahmeöffnung 4 noch die Wirkstelle 22 erreicht hat.

Die Zeitpunkte, zu welchen - zusätzlich zur Verdrehung der Zwangsführung 38 von der Hauptantriebswelle 41 aus - eine automatische Verstellung der Bauteile 52,53 der Zwangsführung 38 erfolgt bzw. das Ausmaß dieser Verstellung lässt sich in einfacher Weise variieren. Hiefür ist auf die Hauptantriebswelle 41 eine Zählscheibe 70 aufgesetzt, welche mittels zahnartiger Vorsprünge 71 an ihrem Umfang Impulse in einem Endschalter 72 erzeugt, der mittels eines Kabels 73 an eine einstellbare Steuerung 74 (Fig.2) angeschlossen ist, über welche die zuvor erwähnten Variationen der Zeitpunkte und Drehwinkel der Welle 59 und damit der Verstellung der die Zwangsführung 38 tragenden Bauteile 52,53 eingestellt werden können. Die Steuerung 74 speist den Servomotor 63 entsprechend an. Die Umsteuerung der Drehrichtung des Servomotors 63 lässt sich z.B. bei Erreichen einer bestimmten, von der Zählscheibe 70 ausgelösten Impulsanzahl leicht durchführen. Da einer vollen Umdrehung der Zählscheibe 70 um 360° eine Hin- und Herverschwenkung der Schwinge 44 entspricht und davon die Hin-Verschwenkung für den Trommelvorschub ausgenützt ist, können etwa 180° des Umlaufes der Zählscheibe 70 für die Veränderung der Verhältnisse beim Wirken ausgenutzt werden. Wie bereits erwähnt, kann jedoch schon vor Erreichung der Wirkstelle 22 eine Auswärtsbewegung der Kolben 35 (Stempelanhebung) erfolgen, und zwar durch entsprechende Auswärtsbewegung der Kurvenbahn 37 am verschiebbaren Bauteil 53.

In den Fig.6 und 7 sind Extremstellungen der beiden die Zwangsführung 38 tragenden Bauteile 52,53 dargestellt. Gemäß Fig.6 sind die beiden Bauteile 52,53 am meisten auseinandergezogen, gemäß Fig.7 einander am meisten genähert. Zweckmäßig wird die Relativposition der beiden Bauteile 52,53 durch entsprechende Ansteuerung des Servomotors 63 so gesteuert, dass vor Erreichen der Wirkstelle 22 eine Stempelanhebung erfolgt. Sobald die Wirkstelle 22 erreicht ist, erfolgt eine Rückzugsbewegung der Kolben 35 in den Aufnahmeöffnungen 4, entsprechend dem von der Wirkeinrichtung 23 ausgeübten Wirkdruck. Dieser Rückzug erfolgt während des Trommelstillstandes und kann daher durch eine entsprechende Gestalt der Kurvenbahn 37 und/oder durch eine Einwärtsbewegung des verstellbaren Bauteiles 53 erreicht werden. Die an der Ablegestelle 31 erforderliche Auswärtsbewegung der Kolben 35 wird zweckmäßig allein durch entsprechende Gestalt der Kurvenbahn 37 bewirkt.

Eine zusätzliche Regelungsmöglichkeit für die Relativverstellung des Bauteiles 53 in Bezug auf die Scheibe 52 ergibt sich durch Regelung der Drehzahl des Servomotors. Dies ist insbesondere von Bedeutung beim Übergang von der Portionierstelle 6 zur Wirkstelle 22, da während dieses Überganges sich ja die gesamte Zwangsführung 38 mit der Trommel 2 mitdreht und man daher während dieses Überganges nur auf die Relativverstellung des Bauteiles 53 in Bezug auf den Bauteil 52 angewiesen ist.

Die beschriebene Konstruktion hat aber auch den Vorteil, dass man sich besser anpassen kann an unterschiedliche Gewichte (Volumina) der an der Portionierstelle 6 in die Aufnahmeöffnungen 4 eingedrückten Teigstücke. Zunächst ist eine Verstellung des Aufnahmevolumens der Aufnahmeöffnungen 4 an der Portionierstelle 6 dadurch möglich, dass mittels des Handrades 66 und der Schnecke 61 das Schneckenrad 60 verdreht wird, was eine entsprechende Veränderung der Relativtage des den verschiebbaren Kurvenbahnabschnitt tragenden Bauteiles 53 relativ zum anderen Bauteil 52 zur Folge hat. Da jener Abschnitt der Kurvenbahn 37, welcher am verschiebbaren Bauteil 53 angeordnet ist, zumindest den Verhältnissen beim Wirkvorgang zugeordnet ist, lässt sich durch eine entsprechende Auswärts- bzw. Einwärtsbewegung des Bauteiles 53 in Bezug auf die Achse der Welle 59 eine Anpassung der Wirkverhältnisse an die jeweils gewünschte Teigstückgröße erzielen. Fig.6 zeigt hiebei die Verhältnisse bei minimalem Gewicht der zu wirkenden Teigportion, Fig.7 bei maximalem Gewicht- derselben. Selbstverständlich ist es aber auch möglich, allein durch entsprechende automatische Verstellung des verschiebbaren Bauteiles 53 mittels des Servomotors 63 sich an unterschiedliche, zu wirkende Teigvolumina anzupassen, so dass die beschriebene, über das Handrad 66 erfolgte Voreinstellung entfallen kann.

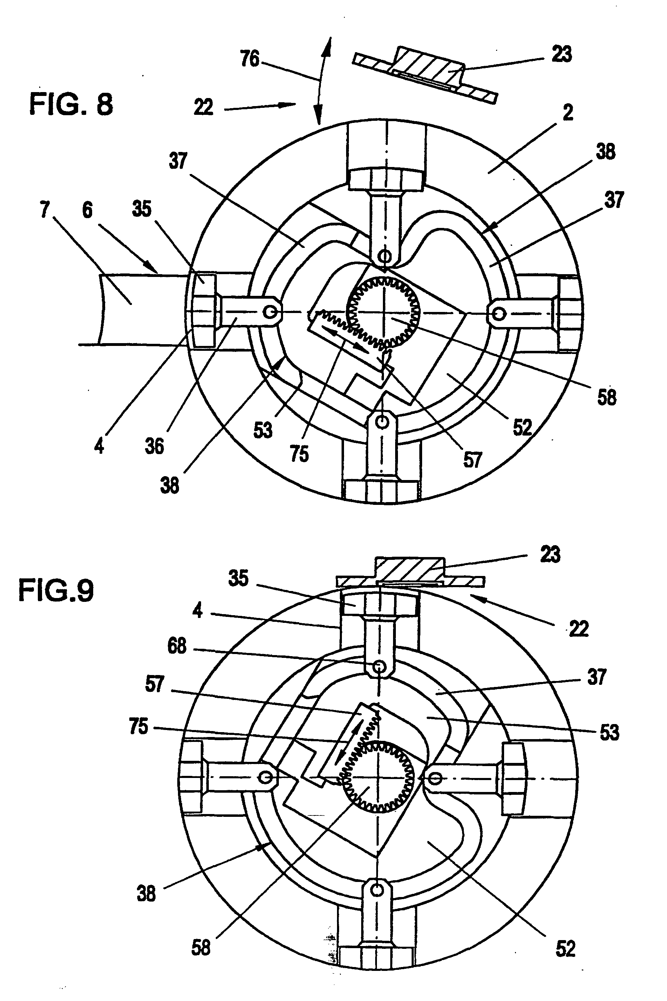

Fig.8 zeigt, dass sich auch an der Portionierstelle 6 die Verhältnisse hinsichtlich des wirksamen Aufnahmevolumens der Aufnahmeöffnungen 4 ändern lassen, wenn das Zahnrad 58 vom Servomotor 63 verdreht und dadurch die Zahnstange 57 in Richtung des Doppelpfeiles 75 verschoben wird, was je nach der Richtung dieser Verschiebung eine Auswärts- oder Einwärtsbewegung des Kolbens 35 bewirkt.

Fig.8 zeigt auch, dass die Wirkeinrichtung 23 an der Wirkstelle 22 in Richtung des Doppelpfeiles 76 verschwenkbar angeordnet sein kann, z.B. durch gelenkige Anordnung des Motors 24 und der gesamten Wirkvorrichtung 23 um eine Achse 77 am Gestell 1 (Fig.1). Die Hochschwenkung der Wirkeinrichtung 23 gewährleistet, dass auch ein Teigstück problemlos unter die Wirkeinrichtung 23 beim Trommelvorschub transportiert werden kann, welches Teigstück mit seiner Oberfläche infolge einer Stempelanhebung über den Umfang der Trommel 2 hervorragt. In Fig.9 ist dargestellt, dass sich die Wirkeinrichtung 23 auf die Aufnahmeöffnung 4 abgesenkt hat, um den nötigen Wirkdruck zu erzeugen. Der an der Wirkstelle 22 befindliche Kolben 35 befindet sich in extrem vorgeschobener Stellung, also entsprechend einer kleinen Teigportion bei hohem Wirkdruck.

Die Bewegung des Schiebers 7 ist ebenfalls von der Hauptantriebswelle 41 (Fig.3) abgeleitet. Hiezu ist der Kurbelarm 42 über den Kurbeltrieb 11 mit der Eindrückeinrichtung 8 verbunden, die ihrerseits mit ihrem oberen Ende in eine Ausnehmung 78 des Schiebers 7 eingesetzt ist und sich durch eine Öffnung 79 des Bodens 80 der Kammer 9 erstreckt.

## Patentansprüche

1. Vorrichtung zum Portionieren und Wirken von Teig, mit einer in einem Gestell (1) um eine horizontale Achse (3) durch einen Hauptantrieb (5) schrittweise drehbaren Trommel (2), die an ihrem Umfang mit Aufnahmeöffnungen (4) für die zu wirkenden Teigportionen versehen ist, die an einer Portionierstelle (6) des Trommelumfanges von einer Eindrückeinrichtung (8) in die Aufnahmeöffnungen (4) eingebracht werden, und mit einer Wirkeinrichtung (23), die an einer in Bezug auf die Portionierstelle (6) in Umfangsrichtung der Trommel (2) versetzten Wirkstelle (22) angeordnet ist, wobei in jeder Aufnahmeöffnung (4) ein Kolben (35) in radialer Richtung der Trommel (2) durch eine gekrümmte Zwangsführung (38) verschiebbar ist, die zumindest in den Stillstandsphasen der Trommel (2) durch einen Antrieb (39) relativ zur Trommel (2) verdrehbar ist und zwei relativ zueinander verstellbare Bauteile (52, 53) aufweist, **dadurch gekennzeichnet, dass** die beiden Bauteile (52,53) durch einen weiteren Antrieb (63) unabhängig von der Verdrehung der Zwangsführung (38) zumindest während des Wirkvorganges motorisch relativ zueinander so verstellbar sind, dass zumindest während des Wirkvorganges eine Verschiebung jedes in der Wirkstelle (22) befindlichen Kolbens (35) in radialer Richtung der Trommel (2) erfolgt.

2. Vorrichtung nach Anspruch 1, **dadurch gekennzeichnet, dass** der weitere Antrieb einen Servomotor (63) aufweist, der von einer vom Hauptantrieb (5) verdrehten Zählscheibe (70) gesteuert ist.

3. Vorrichtung nach Anspruch 1 oder 2, **dadurch gekennzeichnet, dass** die beiden Bauteile (52,53) geradlinig relativ zueinander verstellbar sind, wobei der eine Bauteil (53) in einer geradlinigen Führung (55) des anderen Bauteiles (52) geführt ist.

4. Vorrichtung nach Anspruch 3, **dadurch gekennzeichnet, dass** der eine Bauteil (52) mit einer zur Verdrehung der Zwangsführung (38) dienenden Hohlwelle (51) starr verbunden ist, wogegen der andere Bauteil (53) eine Zahnstange (57) trägt, die mit einem Zahnrad (58) kämmt, das auf einer in der Hohlwelle (51) gelagerten Welle (59) sitzt, die durch den weiteren Antrieb (63) verdrehbar ist.

5. Vorrichtung nach Anspruch 4, **dadurch gekennzeichnet, dass** die Welle (59) ein Schneckenrad (60) trägt, das mit einer durch den weiteren Antrieb (63) verdrehten Schnecke (61) kämmt.

6. Vorrichtung nach einem der Ansprüche 1 bis 5, **dadurch gekennzeichnet, dass** die beiden Bauteile (52,53) durch den weiteren Antrieb (63) schon vor Beginn des Wirkvorganges so verstellbar sind, dass die Kolben (35) nach außen bewegt werden.

7. Vorrichtung nach einem der Ansprüche 1 bis 6, **dadurch gekennzeichnet, dass** der Servomotor (63) des weiteren Antriebes von einer Schwinge (44) getragen ist, über welche der schrittweise Vorschub der Trommel (2) und die Verdrehung der Zwangsführung (38) relativ zur Trommel (2) erfolgen.

8. Vorrichtung nach den Ansprüchen 5 und 7, **dadurch gekennzeichnet, dass** die Schwinge (44) ein Gehäuse (65) trägt, in weichem die Abtriebswelle (62) des Servomotors (63) gelagert ist, wobei diese Abtriebswelle (62) die Schnecke (61) trägt, welche mit dem ebenfalls innerhalb des Gehäuses (65) angeordneten Schneckenrad (60) kämmt.

9. Vorrichtung nach Anspruch 8, **dadurch gekennzeichnet, dass** die Welle (62) das Gehäuse (65) durchsetzt und an ihrem aus dem Gehäuse herausragenden Ende ein Handrad (66) für die händische Verstellung der Zwangsführung (38) trägt.

## Claims

1. Apportioning and kneading device for dough, with a drum (2) in a frame (1) rotatable in stages about a horizontal axis (3) by means of a main drive (5), the drum being provided on its periphery with receiving apertures (4) for the dough portions to be kneaded, which are inserted into the receiving apertures (4) at an apportioning point (6) of the drum periphery by a forcing device (8), and with a kneading device (23) which is arranged at a kneading point (22) offset relative to the apportioning point (6) in the peripheral direction of the drum (2), in each receiving aperture (4) a piston (35) being able to be displaced in the radial direction of the drum (2) by means of a curved forced guide (38), which at least in the idling phases of the drum (2) can be rotated by a drive (39) relative to the drum (2) and comprises two components (52, 53) which can be adjusted relative to one another, **characterised in that** the two components (52, 53) can be adjusted relative to one another in a motorised manner at least during the kneading process by means of a further drive (63) independently of the rotation of the forced guide (38), in such a manner that at least during the kneading process each piston (35) located at the kneading point (22) is displaced in the radial direction of the drum (2).

2. Device according to claim 1, **characterised in that** the further drive comprises a servo motor (63) which is controlled by a counting disc (70) rotated by the main drive (5).

3. Device according to claim 1 or 2, **characterised in that** the two components (52, 53) can be rectilinearly adjusted relative to one another, the one component (53) being guided in a rectilinear guide (55) of the other component (52).

4. Device according to claim 3, **characterised in that** the one component (52) is rigidly connected to a hollow shaft (51) serving to rotate the forced guide (38), whereas the other component (53) carries a toothed rack (57) which meshes with a gear wheel (58) which sits on a shaft (59) mounted in the hollow shaft (51), which can be rotated by the further drive (63).

5. Device according to claim 4, **characterised in that** the shaft (59) carries a worm gear (60) which meshes with a worm (61) rotated by the further drive (63).

6. Device according to any of claims 1 to 5, **characterised in that** the two components (52, 53) can be adjusted by the further drive (63), even before the start of the kneading process, in such a manner that the pistons (35) are moved outwardly.

7. Device according to any of claims 1 to 6, **characterised in that** the servo motor (63) of the further drive is carried by a rocker arm (44) via which the drum (2) is pushed forward in stages and the forced guide (38) is rotated relative to the drum (2).

8. Device according to claims 5 and 7, **characterised in that** the rocker arm (44) carries a housing (65) in which the drive shaft (62) of the servo motor (63) is mounted, this drive shaft (62) carrying the worm (61) which meshes with the worm gear (60) arranged also within the housing (65).

9. Device according to claim 8, **characterised in that** the shaft (62) passes through the housing (65) and carries a handwheel (66) on its end protruding from the housing for the manual adjustment of the forced guide (38).

## Revendications

1. Dispositif pour diviser et pétrir la pâte, comprenant un tambour (2) qu'un entraînement principal (5) permet de faire tourner pas à pas dans un bâti (1), autour d'un axe horizontal (3), et qui est doté sur son pourtour d'ouvertures de réception (4) pour les pâtons à pétrir qui sont placés par un dispositif d'enfoncement (8) dans les ouvertures de réception (4) au niveau d'une station de division (6) du pourtour du tambour, ainsi qu'un dispositif de pétrissage (23) qui est disposé au niveau d'une station de pétrissage (22) décalée par rapport à la station de division (6) dans la direction du pourtour du tambour (2), sachant que dans chaque ouverture de réception (4), un piston (35) peut coulisser dans la direction radiale du tambour (2) grâce à un guidage forcé courbé (38) qui, au moins au cours des phases d'immobilisation du tambour (2), peut tourner par rapport au tambour (2) en étant mû par un entraînement (39), et présente deux éléments (52, 53) mobiles l'un par rapport à l'autre, **caractérisé en ce que**, tout au moins pendant le processus de pétrissage, les deux éléments (52, 53) peuvent être déplacés l'un par rapport à l'autre de façon motorisée par un entraînement supplémentaire (63) indépendamment de la rotation du guidage forcé (38) de telle manière qu'au moins pendant le pétrissage, chaque piston (35) se trouvant dans la station de pétrissage (22) se déplace dans la direction radiale du tambour (2).

2. Dispositif selon la revendication 1, **caractérisé en ce que** l'entraînement supplémentaire présente un servomoteur (63) qui est piloté par un disque de comptage (70) entraîné en rotation par l'entraînement principal (5).

3. Dispositif selon la revendication 1 ou 2, **caractérisé en ce que** les deux éléments (52, 53) sont mobiles l'un par rapport à l'autre de façon rectiligne, sachant que l'un des éléments (53) est guidé dans un guide rectiligne (55) de l'autre élément (52).

4. Dispositif selon la revendication 3, **caractérisé en ce que** l'un des éléments (52) est solidaire d'un arbre creux (51) servant à faire tourner le guidage forcé (38), tandis que l'autre élément (53) porte une crémaillère (57) qui engrène avec une roue dentée (58) située sur un arbre (59) monté dans l'arbre creux (51), lequel est mû en rotation par l'entraînement supplémentaire (63).

5. Dispositif selon la revendication 4, **caractérisé en ce que** l'arbre (59) porte une roue hélicoïdale (60) qui engrène avec une vis sans fin (61) que l'entraînement supplémentaire (63) fait tourner.

6. Dispositif selon l'une des revendications 1 à 5, **caractérisé en ce que** les deux éléments (52, 53) sont déjà déplaçables par l'entraînement supplémentaire (63) avant le début du processus de pétrissage de manière à ce que les pistons (35) soient déplacés vers l'extérieur.

7. Dispositif selon l'une des revendications 1 à 6, **caractérisé en ce que** le servomoteur (63) de l'entraînement supplémentaire est porté par une bielle oscillante (44) qui assure l'avance pas à pas du tambour (2) et la rotation du guidage forcé (38) par rapport au tambour (2).

8. Dispositif selon les revendications 5 et 7, **caractérisé en ce que** la bielle oscillante (44) porte un carter (65) dans lequel sont logés l'arbre de sortie (62) du servomoteur (63), sachant que cet arbre de sortie (62) porte la vis sans fin (61) qui engrène avec la roue hélicoïdale (60) située également à l'intérieur du carter (65).

9. Dispositif selon la revendication 8, **caractérisé en ce que** l'arbre (62) traverse le carter (65) et porte à son extrémité faisant saillie du carter un volant (66) pour le déplacement manuel du guidage forcé (38).
